(19) Europäisches Patentamt / European Patent Office / Office européen des brevets

(11) **EP 3 640 565 A1**

(12) **EUROPÄISCHE PATENTANMELDUNG**

(43) Veröffentlichungstag:
**22.04.2020 Patentblatt 2020/17**

(21) Anmeldenummer: **19201606.1**

(22) Anmeldetag: **07.10.2019**

(51) Int Cl.:
**F25B 29/00** (2006.01)   **F25B 49/02** (2006.01)
**F25B 41/06** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.10.2018 DE 102018125411**

(71) Anmelder: **Vaillant GmbH**
**42859 Remscheid (DE)**

(72) Erfinder:
• **Starbek, Roman**
  **51399 Burscheid (DE)**
• **Tim Grunert, Tim**
  **42369 Wuppertal (DE)**

(74) Vertreter: **Popp, Carsten**
**Vaillant GmbH**
**IRP**
**Berghauser Straße 40**
**42859 Remscheid (DE)**

(54) **COP-OPTIMALE LEISTUNGSREGELUNG**

(57)    Verfahren zur Regelung einer Wärmepumpe, in der ein linksdrehender thermodynamischer Clausius-Rankine-Kreisprozess betrieben und in welchem ein Arbeitsfluid in einem geschlossenen, hermetisch dichten Arbeitsfluidumlauf (1) geführt wird, wobei die Wärmepumpe jeweils mindestens einen Kompressor, mindestens ein elektronisch geregeltes Expansionsventil, mindestens einen Kondensator und mindestens einen Verdampfer aufweist, wobei Nutzwärme an einen Heizkreislauf abgegeben wird, wobei ein SISO-Control-Regelungsverfahren für die Regelung des Kompressors zum Einsatz kommt, die Führungsgröße für die Kompressorregelung der Wärmestrom ist, der vom Arbeitsfluid im Kondensator durch die Wärmetauscherwand auf das Heizkreiswasser übertragen wird, die Regelung des elektronisch geregeltes Expansionsventils durch eine umschaltbare Kaskadenregelung erfolgt, wobei die erste der Kaskadenregelungen als Führungsgröße den Temperaturwert der Überhitzung im Verdampfer nutzt, und wobei die zweite der Kaskadenregelungen als Führungsgröße die Arbeitsfluid-Massenstromdifferenz zwischen Kompressor und elektronisch geregeltem Expansionsventil (4) nutzt, und von der ersten auf die zweite der Kaskadenregelungen umgeschaltet wird, sobald sich während der Regelung der ersten Kaskadenregelung ein stationärer Zustand eingestellt hat.

Fig. 1

EP 3 640 565 A1

**Beschreibung**

Die Erfindung betrifft eine Regelung und Steuerung von Wärmepumpen. Der Begriff der Wärmepumpe wird hierbei umfassend für Geräte verwendet, in denen ein linksdrehender Clausius-Rankine-Kreisprozess ablaufen soll, wobei entweder Nutzwärme oder Nutzkälte oder beides gleichzeitig erzeugt wird. Auch kann eine solche Wärmepumpe gestuft ausgeführt sein, um Heizwärme bei einem niedrigen Temperaturniveau, z.B. bei 28 Grad Celsius für eine Fußbodenheizung, und Brauchwasser bei einem höheren Temperaturniveau, z. B. bei 70 Grad Celsius bereitzustellen. Hierbei entzieht die Wärmepumpe einem kälteren Medium Wärme und transformiert sie mittels elektrischer Energie auf ein höheres Temperaturniveau.

Beim Entzug dieser Wärme kann jeweils auch Kälte erzeugt werden. Auch die Kälte kann bei verschiedenen Temperaturen benötigt werden, für die Klimatisierung beispielsweise bei 14 Grad Celsius und für die Lebensmittelkühlung auch 4 Grad Celsius oder für Gefrieranwendungen noch tiefer. In manchen Bauarten kann zwischen Heizbetrieb und Klimatisierung umgeschaltet, in anderen können beide Betriebsarten parallel betrieben werden.

Derartige Wärmepumpen besitzen mindestens einen geregelten Kompressor bzw. Verdichter, mindestens ein geregeltes elektronisches Expansionsventil, mindestens einen Kondensator und mindestens einen Verdampfer. Sofern mehrere Temperaturstufen bedient werden sollen, können auch gestufte Kompressoren und mehrere seriell angeordnete elektronisch geregelte Expansionsventile mit Zwischenerwärmung des Arbeitsfluids, d.h. Kälteabgabe angeordnet sein.

Eine Vielzahl von Verschaltungsvarianten sind nach dem Stand der Technik für Wärmepumpen bekannt geworden, sie korrespondieren mit lokal und temporär unterschiedlichsten Anforderungen und Betriebsbedingungen. Durch wechselnde Witterung und wechselnde Nutzerwünsche kann hierbei eine anspruchsvolle Dynamik entstehen, die die Regelung einer Wärmepumpe in hohem Maße fordert. Besonders problematisch sind hierbei die Kopplungseffekte zwischen Kompressor bzw. Kompressorstufen und dem Expansionsventil bzw. den Expansionsventilen im Falle von gestuften Wärmepumpen. Hier entsteht auch das Problem, eine Vielzahl von limitierenden Randbedingungen zu berücksichtigen, die nichtlinearen Charakter haben, da beispielsweise für Kompressoren regelmäßig ein oberes und ein unteres Limit für den Durchsatz zu beachten ist. All dies führt zu einem beschränkten Regelbereich.

In Wärmepumpen kommen nach dem Stand der Technik klassische Regelungskonzepte als Eingrößenregelungen, sogenannte Verfahren der SISO-Control, zur Ansteuerung des elektronischen Expansionsventils und des Kompressors zum Einsatz, hierbei bedeutet SISO, dass nur eine Größe in den Regelkreis eingeht und nur eine Größe als Ausgabe erfolgt. Ein Beispiel für einen verbreiteten Regelungsansatz ist die Verwendung der Heizkreisvorlauftemperatur als Führungsgröße für die Kompressor-Regelung und die Verwendung der Kältemittel-Überhitzung am Verdampferausgang oder der Kältemittel-Unterkühlung am Kondensatorausgang als Führungsgröße für die Regelung des elektronisch geregelten Expansionsventils. Im Falle von gestuften Systemen gilt dies entsprechend.

Dagegen existieren in Wissenschaft und Forschung moderne Regelungskonzepte, die die optimale Mehrgrößenregelung, sogenannte MIMO-Control, für Wärmepumpen und Kältekreise favorisieren. Hierbei bedeutet MIMO, dass eine Vielzahl von Größen in den Regelkreis eingehen und auch eine Vielzahl von Größen als Ausgabe erfolgt. Dabei stehen die größtmögliche physikalische Entkopplung der Systemzustände sowie die größtmögliche Effizienz des Systems im Vordergrund.

Beide Konzeptionen haben jeweils Vor- und Nachteile. Bei der SISO-Control werden die Aktuator-Regelungen durch den hohen Kopplungsgrad der Systemzustände deutlich erschwert. Die Aktuatoren arbeiten oftmals gegeneinander, so dass der Kalibrierungsaufwand für die Regelungsparameter sehr hoch ist. Erschwerend kommen Nichtlinearitäten der Kältekreisdynamik hinzu, die die Einführung zusätzlicher Maßnahmen und weiterer kalibrierbarer Parameter notwendig machen.

Durch die direkte Regelung der Heizkreisvorlauftemperatur können physikalische Zwischengrößen wie z.B. die Kältemitteltemperatur, der Wärmestrom und der Druck im Kondensator nicht direkt beeinflusst werden. Werden diese Größen berechnet oder gemessen und zum Beispiel durch Sättigungen beeinflusst, führt dies zu weiteren Nichtlinearitäten im Regelkreis, so dass hier weitere Probleme bei der Abstimmung der Regelkreise bestehen. Im Grunde ist der Fachmann froh, wenn die Regelung überhaupt zufriedenstellend funktioniert, eine Optimierung findet meistens nicht statt.

So wurden Anstrengungen unternommen, geeignete Output-Parameter zu finden, mit denen eine Regelung gelingt. Für die Regelung der Öffnungsweite des Expansionsventils diente dabei die Überhitzung im Verdampfer, für die Kompressordrehzahl der Verdampfer-Ausgangsdruck und für die Lüfterleistung des Verdampfers die Verdampfer-Lufteintrittstemperatur. Diese konnten nach Neera Jain and Andrew G Alleyne, Comparison of SISO and MIMO Control Techniques for a Diagonally Dominant Vapor Compression System, 2009 American Control Conference Hyatt Regency Riverfront, St. Lous, MO, ASA, June 10-12. 2009, Seiten 1580-1585, entkoppelt werden, indem für die Regelung der Öffnungsweite des Expansionsventils der Durchschnitts-Systemdruck, für die Kompressordrehzahl der System-Differenzdruck und für die Lüfterleistung des Verdampfers die Durchschnitts-Verdampfertemperatur als Führungsgrößen gewählt wurden.

Bei der MIMO-Control werden die Konzepte aufgrund der sehr hohen mathematischen Komplexität bei der Parametrierung von Wärmepumpen und des damit verbundenen hohen Personalaufwands oftmals nicht akzeptiert. Die optimalen Regelparameter müssen dabei in einem geschlossenen Entwurf mithilfe von physikalischen Modellen berechnet werden und können manuell nicht mehr in anschaulicher Weise am Steuergerät angepasst bzw. sinnvoll verändert werden. Zudem müssen für jeden neuen Kältekreis-/Wärmepumpentyp zunächst neue Parameter für das physikalische Modell bestimmt und im Anschluss neue Regelungsparameter analytisch berechnet werden. Das ist unübersichtlich und aufwendig, aber man erreicht höhere Wirkungsgrade, wenn die Regelung denn überhaupt zufriedenstellend funktioniert.

Für Wärmepumpen existieren eine Vielzahl von Wirkungsgraddefinitionen, je nach Aufgabenstellung. Im einfachsten Fall soll Umgebungswärme von einem niedrigen Niveau auf Heizwärme eines höhen Niveaus gebracht werden. Hierfür ist die Leistungszahl, auch als CoP (Coefficient of Performance) bekannt, von besonderer Bedeutung. Die Leistungszahl kann auf die Enthalpien des Arbeitsfluids bezogen werden oder auf das Verhältnis von Nutzwärme zu aufgewendeter elektrischer Energie, wobei in letzterem Fall die Frage im Raum steht, welche der Nebenaggregate mitzusummieren sind, etwa die Umwälzpumpen der Warmwasserheizung, die bei niedrigeren Vorlauftemperaturen für dieselbe Heizleistung mehr Energie zur Umwälzung benötigen als für höhere Vorlauftemperaturen. Zu unterscheiden ist auch die Leistungszahl für Volllast, für Nennlast und für Teillast. In komplizierten Fällen sind mehrere Nutzfälle für verschiedene Wärmeabgaben und Kälteabgaben zu bewerten. Es ist dabei das Ziel jeder Regelung, die höchstmögliche Leistungszahl zu erreichen, bei der ein stabiler Betrieb noch möglich ist.

Die Leistungszahl bezieht sich auch auf die Betriebstemperaturen bei der Auslegung hinsichtlich der Vorlauf- und Rücklauftemperaturen sowie der Medien. Allgemein wird angenommen, dass die Rücklauftemperatur im Heizkreislauf fünf Grad Kelvin niedriger liegt als die Vorlauftemperatur, ist die Wärmequelle ein Solekreislauf, wird mit einer Abkühlung der Sole um drei Grad Kelvin gerechnet. Aufgrund der Vielzahl möglicher Randbedingungen und ihrer Dynamik bei schnellen Änderungen ist es schwierig, die höchstmögliche Leistungszahl für den jeweiligen Betriebsfall genau zu bestimmen und damit zu überprüfen, wieviel Optimierungspotenzial jeweils überhaupt noch besteht.

Das theoretisch mögliche Optimierungspotenzial ergibt sich aus dem Kehrwert des Carnot-Prozesses für stationäre oder quasi-stationäre Betriebsfälle aus dem Quotienten der Vorlauftemperatur und der Differenz von Vorlauftemperatur und der Temperatur der Wärmequelle, jeweils in Absoluttemperaturen. Das Verhältnis der tatsächlich erreichten Leistungszahl zur theoretisch möglichen Leistungszahl wird als Gütegrad bezeichnet. In diesen Gütegrad gehen die oben genannten Verluste für die elektrischen Maschinen, die Temperaturdifferenzen in den Wärmetauschern, der Drosselverlust im elektronisch geregelten Expansionsventil sowie vor allem die Überhitzung im Verdampfer ein. Bezüglich des Drosselverlusts und dem elektrischen Energieverbrauch der Maschinen bestehen im Betrieb kaum Freiheitsgrade der Optimierung.

Besonders maßgeblich für die Optimierung der Leistungszahl ist daher die Überhitzung im Verdampfer. Für handelsübliche Kompressoren muss jederzeit gewährleistet werden, dass kein flüssiger Anteil des Arbeitsfluids in den Kompressor gelangt. Dies wird erreicht, indem die Temperatur des verdampften Arbeitsfluids nach der vollständigen Verdampfung weiter erhöht wird. Praktisch bedeutet dies entweder, dass die Temperatur des Arbeitsfluids, welches in den Verdampfer strömt, deutlich unterhalb der Temperatur liegen muss, mit der der Wärmeeintrag in den Verdampfer erfolgt, damit im Verdampfer nach dem Verdampfungsvorgang noch genügend Temperaturdifferenz-Reserve vorhanden ist, die zulässt, dass diese Überhitzung des Dampfes auch stattfinden kann, oder das Arbeitsfluid muss nach dem Verdampferaustritt separat aufgeheizt werden. Eine solche Regelung wird beispielsweise in der WO 2014/191237 A1 eingehend beschrieben. Zur Regelung der Überhitzung wird die Druck-Temperatureinstellung entweder über das elektronisch geregelte Expansionsventil oder durch eine beheizte Rohrleitung zwischen Verdampfer und Kompressor vorgeschlagen.

Die Eintrittstemperatur des Arbeitsfluids in den Verdampfer stellt sich durch den Druck ein, auf den das elektronisch geregelte Expansionsventil das Arbeitsfluid entspannt. Die Verdampfung im Verdampfer findet dann konstant bei dieser Temperatur im Zweiphasengebiet statt. Am Ende des Verdampfers liegt nur noch Dampf vor, die restliche vorhandene Temperaturdifferenz dient dann zur Überhitzung des Dampfes.

Der Massenstrom an Arbeitsfluid, der vom Kompressor in den Kondensator gefördert wird, richtet sich nach dem Wärmebedarf, den der Heizkreislauf aus dem Kondensator abzieht, letzterer ist aufgrund der Temperaturdifferenz und der Fördermenge des Vor- und Rücklaufs des Heizkreiswassers im Regelfall gut bekannt. Da auch die Enthalpien des Arbeitsfluids am Eintritt und am Austritt aus dem Kondensator sowie die Kompressorkennlinie ebenfalls gut bekannt sind, kann die Förderleistung des Kompressors direkt aus dem Wärmebedarf des Heizkreislaufs ermittelt und geregelt werden.

Im stationären Idealfall ergibt sich dann automatisch, dass der Massenstrom an Arbeitsfluid, der aus dem elektronisch geregelten Expansionsventil in den Verdampfer strömt, genau dem Massenstrom entspricht, der aus dem Verdampfer in den nachgeschalteten Kompressor geführt und von diesem in den Kondensator gefördert wird.

In praktischen Fällen, etwa wenn die Temperatur der Wärmequelle plötzlich sinkt, wie z.B. bei einem Unwetter im Falle einer Umgebungsluft-Wärmequelle, stimmt diese Massenbilanz im Verdampfer plötzlich nicht mehr und das System kann instabil werden. Klassische SISO-Regelungssysteme nutzen daher einen großen Sicherheitsabstand für die Überhitzung als Regelgröße, damit auch in solchen Fällen keine Schäden am Kompressor entstehen. Das verringert die Leistungszahl jedoch deutlich.

Bei MIMO-Regelungen kann die sich ergebende Massenstromdifferenz jedoch rechnerisch anhand eines physikalischen Modells ermittelt werden und dynamische Vorgänge lassen sich auf diese Weise schnell regeln, ohne dass es großer Sicherheitsabstände für eine Überhitzungsregelung bedarf. In diesem Fall kann die Massenstromdifferenz als Regelgröße anstelle der Überhitzung genutzt werden. Der Massenstrom durch das elektronisch geregelte Expansionsventil ist jedoch nicht direkt messbar. Hierfür stehen nach dem Stand der Technik leistungsfähige Schätzverfahren bzw. Massenstrombeobachter zur Verfügung. Aus dieser Massenstromschätzung im elektronisch geregelten Expansionsventil und der Berechnung des Kompressordurchsatzes kann die Massenstromdifferenz ermittelt werden.

Die Aufgabe der Erfindung ist daher, ein wirtschaftliches Regelungsverfahren bereitzustellen, welches die Vorteile der bekannten SISO-Control und die der MIMO-Control aufweist, dabei die bekannten Nachteile vermeidet und stabil ist.

Die Erfindung löst die Aufgabe durch ein Verfahren zur Regelung einer Wärmepumpe, in der ein linksdrehender thermodynamischer Clausius-Rankine-Kreisprozess betrieben und in welchem ein Arbeitsfluid in einem geschlossenen, hermetisch dichten Arbeitsfluidumlauf geführt wird, wobei die Wärmepumpe jeweils mindestens einen Kompressor, ein elektronisch geregeltes Expansionsventil, einen Kondensator und einen Verdampfer aufweist,

- ein SISO-Control-Regelungsverfahren für die Regelung jedes Kompressors zum Einsatz kommt,
- die Führungsgröße für die Kompressorregelung der Wärmestrom ist, der vom Arbeitsfluid im zugeordneten Kondensator durch die Wärmetauscherwand auf das Heizkreiswasser übertragen wird,
- die Regelung jedes elektronisch geregelten Expansionsventils durch eine umschaltbare Kaskadenregelung erfolgt,
- wobei die erste der Kaskadenregelungen als Führungsgröße den Temperaturwert der Überhitzung im zugeordneten Verdampfer nutzt,
- und wobei die zweite der Kaskadenregelungen als Führungsgröße die Arbeitsfluid-Massenstromdifferenz zwischen Kompressor und elektronisch geregeltem Expansionsventil nutzt,
- und von der ersten auf die zweite der Kaskadenregelungen umgeschaltet wird, sobald sich während der Regelung der ersten Kaskadenregelung ein stationärer Zustand eingestellt hat.

Im einfachsten Fall werden in der Wärmepumpe nur jeweils ein Kompressor, ein elektronisches Expansionsventil, ein Verdampfer und ein Kondensator eingesetzt. Sollen jedoch mehrere Temperaturniveaus bedient werden, etwa eine Niedertemperatur-Fußbodenheizung und eine Warmwasseraufheizung, können mehrere Kompressorstufen oder Kompressoren mit zugeordneten, ihnen in Strömungsrichtung nachfolgenden Kondensatoren zum Einsatz kommen. Das gleiche gilt, falls unterschiedliche Wärmequellen zum Einsatz kommen sollen, etwa Luft bei positiven Außentemperaturen und Grundwasser bei frostigen Außentemperaturen. Auch eine vorgesehene Umschaltmöglichkeit der Wärmepumpe in den Klimatisierungsbetrieb erhöht die Anzahl der vorzusehenden Geräte. Aus Gründen der Darstellung wird im folgenden der einfache Fall beschrieben, dass die Geräte nur einfach vorliegen, wobei die Erfindung auf diesen Fall aber nicht beschränkt ist.

Die Arbeitsfluid-Massenstromdifferenz wird hierbei vorzugsweise durch ein Schätzverfahren bzw. einen Zustandsbeobachter ermittelt, wobei dieser Zustandsbeobachter den Massenstrom durch das elektronisch geregelte Expansionsventil schätzt und aus der Differenz zum Massenstromdurchsatz des Kompressors dann die Arbeitsfluid-Massenstromdifferenz bildet. Falls mehrere Kompressorstufen oder elektronisch geregelte Expansionsventile zum Einsatz kommen, wird entsprechend vorgesehen, dass ein Zustandsbeobachter den Massenstrom durch jeden Kompressor und den Massenstrom durch jedes elektronisch geregelte Expansionsventil ermittelt. Auf diese Weise wird innerhalb des SISO-Control-Regelungsverfahrens ein MIMO-Regelungsverfahren integriert. Diese Wahl der Leistungsregelung führt vor allem zur Entkopplung des Kältekreises von überlagerten Wärmepumpenfunktionen wie z.B. der Vorlauftemperaturregelung.

Der große Vorteil ist dabei, dass die notwendige Überhitzung des Arbeitsfluids vor dem Eintritt in den Kompressor durch die Umschaltung auf die Arbeitsfluid-Massenstromdifferenz minimiert wird, der Verdampfer kann so nicht mehr volllaufen und somit kann nur dampfförmiges Arbeitsfluid aus dem Verdampfer austreten. Die Massenstromdifferenz wird in der Regel auf den Zielwert Null eingestellt. Sofern der Massenstrombeobachter anzeigen sollte, dass mehr Arbeitsfluid als gewünscht in den Verdampfer gelangt ist, kann der Zielwert auch zum Ausgleich leicht negativ eingestellt werden.

Nach der Umschaltung werden die Führungsgrößen stets so berechnet, dass die Leistungszahl optimal wird. Diese Möglichkeit besteht dadurch, dass im Rahmen der Massenstromschätzung ein physikalisches Modell ständig mitgerechnet wird, welches die Leistungszahl als Nebenprodukt stets mitberechnet und auch den Einfluss des nachfolgenden Regeleingriffs jeweils einschätzen kann. Auf diese Weise wird auch ein höherer Arbeitsbereich der Regelung ermöglicht.

Der Verdampfer kann in einer Ausgestaltung der Erfindung von einem Lüfter angeströmt werden, sofern ein Wärmeaustausch mit Luft vorgesehen ist. Die Anströmung des Lüfters ist dann eine weitere Regelgröße, die über den elektrischen Energieverbrauch auch in die Leistungszahl eingeht. Sofern also eine positive Arbeitsfluid-Massenstromdifferenz ermittelt wird, also mehr Arbeitsfluid in den Verdampfer einströmt als ausströmt, wird der Lüfter hochgeregelt, um die Verdampfung zu verbessern und gleichzeitig wird das elektronisch geregelte Expansionsventil weiter geschlossen, um Druck und Temperatur im Verdampfer abzusenken.

Beide Regelungseingriffe haben Einfluss auf die Leistungszahl, da eine Temperaturabsenkung eine Spreizung des Temperaturunterschiedes bewirkt, was tendenziell zu einer Verschlechterung der Leistungszahl führt. Eine Erhöhung der Lüfterdrehzahl bewirkt einen Mehrverbrauch an elektrischer Energie, was ebenfalls tendenziell zu einer Verschlechterung der Leistungszahl führt. Durch das physikalische Modell des Massenstromschätzers kann das Verhältnis beider Regeleingriffe auf die Leistungszahl bestimmt und ihr optimales Verhältnis zueinander gewählt werden.

In weiteren Ausgestaltungen der Erfindung ist vorgesehen, dass die Leistungszahl in der zweiten der Kaskadenregelungen bei der Ermittlung der Arbeitsfluid-Massenstromdifferenz ermittelt wird, und, wenn ein Lüfter vorgesehen ist, die Lüfterdrehzahl zusammen mit jedem elektronisch geregeltem Expansionsventil in einem MIMO-Regelungsverfahren gleichzeitig geregelt werden und dabei die Leistungszahl optimiert wird. Ist kein Lüfter vorgesehen, wird die Leistungszahl ohne diese Berücksichtigung ermittelt. Sofern beispielsweise ein Solekreislauf zur Wärmequelle geführt wird, kann die betreffende Umwälzpumpe berücksichtigt werden. Dies gilt auch für alle anderen elektrischen Verbraucher, die in den verschiedensten Anwendungen zum Einsatz kommen können.

In einer weiteren Ausgestaltung der Erfindung ist vorgesehen, dass die Leistungsregelung der Kompressoren aus den Wärmeströmen der jeweils zugeordneten Wärmesenke abgeleitet wird, wobei je aus einer Sollwärmeleistung und einer gemessenen Wärmeleistung in einem ersten Regler zunächst eine Temperaturdifferenz für den zugeordneten Kondensator ermittelt wird, diese zur Vorlauftemperatur der jeweiligen Wärmesenke addiert und daraus je eine Solltemperatur für den zugeordneten Kondensator gebildet wird, diese Solltemperatur mit der gemessenen Kondensatortemperatur verglichen wird und daraus mit einem zweiten Regler je eine Solldrehzahl für den Kompressorantrieb gebildet wird.

In einer weiteren Ausgestaltung der Erfindung ist vorgesehen, dass die Regler für jeden Kompressorantrieb und für jedes elektronische Expansionsventil alle so gestaltet sind, dass sie die Temperaturdifferenzen des jeweils nachfolgenden Wärmetauschers minimieren.

Die Erfindung wird anhand der Figuren 1-5 näher erläutert. Hierbei zeigen:

Fig. 1    eine schematische Darstellung eines linksdrehenden Kälteprozesses,

Fig. 2    ein p-H-Diagramm des Kälteprozesses,

Fig. 3    eine Kaskadenschaltung mit Überhitzungsregelung,

Fig. 4    eine Kaskadenschaltung mit Massenstromregelung,

Fig. 5    einen Kompressor-Envelope.

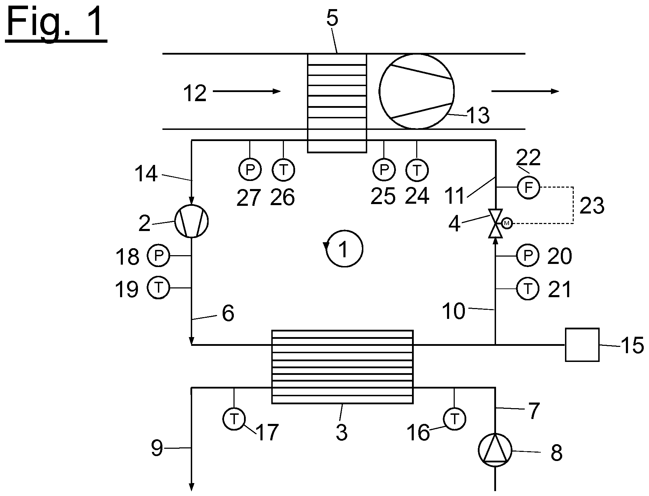

Fig. 1 zeigt eine schematische Darstellung eines linksdrehenden Kälteprozesses für ein einfaches Luft/Wasser-Wärmepumpensystem mit einer schematischen Darstellung der Regelungskaskaden, wobei sich die Erfindung aber nicht auf solch einfache Wärmepumpensysteme beschränkt.

Fig. 1 zeigt in diesem Beispiel einen Kältekreislauf 1 mit einem Kältekompressor 2, einem Kondensator 3, einem elektronisch geregelten Expansionsventil 4 und einem Verdampfer 5. Hierbei strömt verdichtetes Arbeitsfluid 6 zum Kondensator 3, wo es seine Wärme an den Wärmeträgerstrom 7 abgibt, der von der Umwälzpumpe 8 als Wärmestrom 9 zum Verbraucher gefördert wird. Das hierdurch abgekühlte und kondensierte Arbeitsfluid 10 gelangt zum elektronisch geregelten Expansionsventil 4, wobei es sich weiter abkühlt und als Kältestrom 11 in den Verdampfer 5 geleitet wird. Dort nimmt es Wärme der Umgebungsluft 12, die vom Lüfter 13 durch den Verdampfer 5 gesogen wird, auf. Das erwärmte Arbeitsfluid 14 wird wieder von Kältekompressor 2 verdichtet, womit der Kältekreislauf 1 geschlossen ist. Hinter dem Kondensator 3 ist ein Sammelbehälter 15 angeordnet.

Der Wärmeträgerstrom 7 ist hier der Rücklauf aus dem Heizkreislauf, der Wärmestrom 9 der Vorlauf in den Heizkreislauf. Die Fördermenge der Umwälzpumpe 8 ist aus den Kennlinien in Abhängigkeit der Drehzahl gut bekannt, der Temperaturunterschied zwischen Vorlauf und Rücklauf wird von den Temperaturmessstellen 16 und 17 gemessen und an eine zentrale Steuereinheit gemeldet. Daraus wird der Wärmebedarf ermittelt, der als Führungsgröße für die Kompressorförderleistung dient, speziell für die Drehzahl des Antriebs des Kältekompressors 2. Zum Einsatz kommt eine erste Kaskadenregelung.

Am Ausgang des Kältekompressors 2 werden Druck 18 und Temperatur 19 gemessen, um die Enthalpie des verdichteten Arbeitsfluids zu bestimmen, das verdichtete Arbeitsfluid 6 ist vollständig dampfförmig und überhitzt. Am Ausgang des nachfolgenden Kondensators 3 ist das Arbeitsfluid 10 vollständig kondensiert und unterkühlt, Druck 20 und Temperatur 21 werden auch dort gemessen, um die Enthalpie zu bestimmen. Aus der Enthalpiedifferenz wird die Fördermenge, die der Kältekompressor 2 liefern muss, um den Wärmebedarf durch den Heizkreislauf zu decken, genau bestimmt und damit die Drehzahl des Kompressorantriebs geregelt.

Passend zur Fördermenge des Kältekompressors 2 muss auch die Menge an Arbeitsfluid bestimmt werden, die durch das elektronisch geregelten Expansionsventil 4 hindurchtritt, im Idealfall sollten diese beiden Mengen identisch sein. Das jedoch ist problematisch, da sich der Massenstrom durch das Entspannungs-Regelventil 4 nicht direkt messen lässt.

Außerdem will man durch das Regelventil auch die Temperatur des Arbeitsfluids, die an der Temperaturmessstelle 24 gemessen wird, und den Druck, der an der Druckmessstelle 25 gemessen wird, regeln, damit diese zu den Arbeitsbedingungen des Verdampfers passen. Dadurch kann der Fall auftreten, dass die einzustellende Ventilöffnung nicht beide Regelungsziele erfüllen kann. Allerdings ist dies mit einer SISO-Regelung nicht einfach möglich, da man damit jeweils nur Druck/Temperatur oder Überhitzung regeln kann.

Damit das elektronisch geregelte Expansionsventil 4 den erforderlichen Regelungsfreiheitsgrad bekommt, befindet sich zwischen Kondensator und elektronisch geregeltem Expansionsventil 4 der Sammelbehälter 15, der auch als Ausgleichsbehälter dient. In diesem Fall muss dessen Volumen variabel gehalten werden.

Zu Beginn erfolgt die Regelung über die Überhitzung des Arbeitsfluids am Ausgang des Verdampfers 5. Zur Bestimmung der Überhitzung dienen die Temperatur, die an der Temperaturmessstelle 26 gemessen wird, und der Druck, der an der Druckmessstelle 27 gemessen wird. Aus dem Druck wird anhand der Zustandsdaten des Arbeitsfluid zunächst die Temperatur des Zweiphasengebiets ermittelt und aus der Differenz zur Temperaturmessung 26 die Überhitzung errechnet. Für diese Überhitzung wird ein Zielwert vorgegeben, aus dem abgeleitet wird, ob das elektronisch geregelte Expansionsventil 4 weiter geöffnet oder weiter geschlossen werden muss.

Während des Einschwingvorgangs werden alle Zustandsdaten weiter kontinuierlich gemessen und mit einem physikalischen Modell, welches in einem Rechenprogramm parallel in einer Rechen- und Steuereinheit dynamisch berechnet wird, verglichen. Bei der Berechnung des physikalischen Modells werden nach bekanntem Stand der Technik für unbekannte Größen Schätzgrößen verwendet und entsprechend kontinuierlich angepasst, bis das Rechenmodell dem Betriebszustand entspricht. Sobald sich ein stabiler Betrieb des Wärmepumpenprozesses eingestellt hat sowie das physikalische Modell mit den Messwerten hinreichend übereinstimmt, wird aus diesem Modell der Massenstrom durch das elektronisch geregelten Expansionsventil 4 rechnerisch ermittelt. Hierdurch wird die Berechnung zum Massenstrombeobachter 22 bzw. zum Massenstromschätzer.

Das Regelungsverfahren wird sodann umgeschaltet und eine andere Regelungskaskade kommt zum Einsatz. Das Ergebnis F des Massenstrombeobachters 22 wird wie ein Messwert behandelt und regelt die Öffnungsweite des elektronisch geregelten Expansionsventils 4 im Regelkreis 23. Damit ist es möglich, den Kältekompressor 2 und das elektronisch geregelte Expansionsventil 4 gleichzeitig so zu regeln, dass die Massenstromdifferenz als Regelungsziel zu Null vorgegeben wird. Weiterhin wird das Temperaturniveau im Verdampfer 5 so eingeregelt, dass der elektrische Energieverbrauch des Lüfters 13 soweit beeinflusst wird, dass die Summe aller elektrischen Energieverbraucher minimiert wird.

Zu diesem Zweck wird im Rechenmodell außer dem Massenstromschätzer 22 auch ein Energieverbrauchsmodell implementiert, welches die einzelnen Energieverbraucher stets berechnet, die Summe aus den einzelnen Energieverbräuchen vor jedem Regeleingriff abschätzt, und denjenigen Regeleingriff ausführt, der zu dem geringsten Gesamtenergieverbrauch führt.

Auf diese Weise wird die Überhitzung hinter dem Verdampfer 5 geringer, da auch bei dynamischen Vorgängen stets sichergestellt ist, dass keine Flüssigkeit in den Kältekompressor 2 gelangen kann. Auf diese Weise ergibt sich eine optimale Leistungszahl.

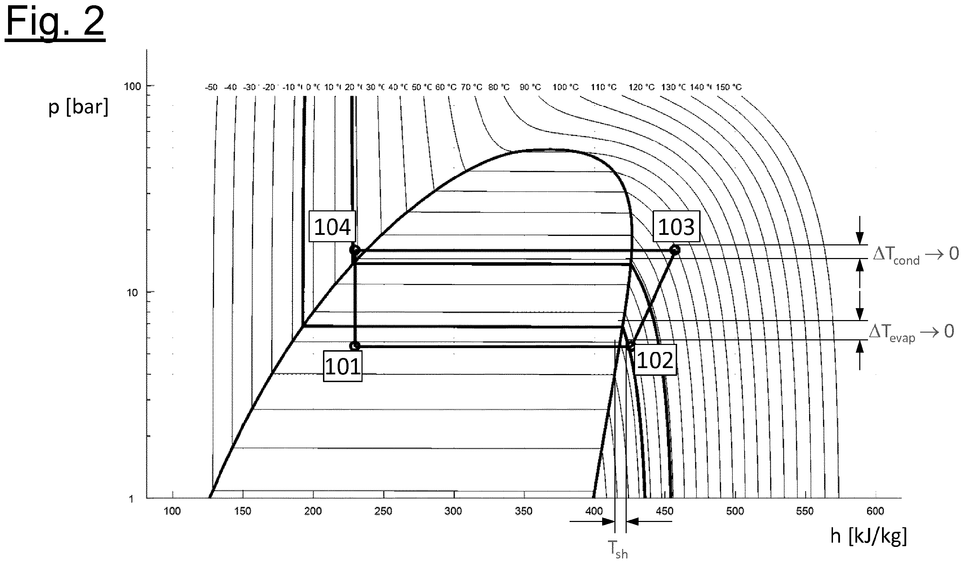

Fig. 2 zeigt ein p-H-Diagramm des Kälteprozesses für ein Kältemittel, wobei es auf die einzelnen Zahlenwerte in diesem Beispiel nicht ankommt. Der Betriebspunkt 101 ist der Startpunkt im Verdampfer 5, die Temperatur entspricht der gemessenen Temperatur an der Messstelle 24 im Kältestrom 11. Üblicherweise liegt das Kältemittel im Betriebspunkt 101 als Zweiphasengemisch vor. Während das Kältemittel den Verdampfer 5 passiert, erhöht sich der Dampfanteil kontinuierlich, bis alles Kältemittel verdampft ist. Danach findet noch eine Überhitzung im Verdampfer 5 statt, das Arbeitsfluid 14 erreicht überhitzt den Betriebspunkt 102.

Die Geschwindigkeit der Verdampfung hängt einerseits von der Temperaturdifferenz $\Delta T_{evap}$ zur Wärmequelle, andererseits von der Anströmung der Wärmetauscherfläche des Verdampfers seitens des Mediums der Wärmequelle ab, im Beispiel ist das Luftförderleistung des Lüfters 13. Die Temperatur der Wärmequelle muss daher höher sein, als das kältere Arbeitsfluid. Aus der Temperaturdifferenz $\Delta T_{evap}$ ergibt sich auch in derselben Weise die Überhitzung $\Delta T_{sh}$ des Verdampfers. Aus thermodynamischen Gründen ist es vorteilhaft, wenn diese Temperaturdifferenz $\Delta T_{evap}$ zur Wärmequelle möglichst gering ausfällt, also auch die Überhitzung $\Delta T_{sh}$.

Das erwärmte Arbeitsfluid 14 wird nach seiner Überhitzung im Verdampfer 5 durch den Kompressor 2 verdichtet, wobei darauf zu achten ist, dass das Zweiphasengebiet nicht tangiert oder durchlaufen wird, was wegen der Form des Zweiphasengebiets auch vom verwendeten Arbeitsfluid abhängt. Durch die Verdichtung wird der Druck auf das obere Druckniveau angehoben und erreicht den Betriebspunkt 103. Die Temperatur des verdichteten Arbeitsfluids 6 liegt dabei um die Temperaturdifferenz $\Delta T_{cond}$ höher als die mittlere Temperatur des Heizwassers im nachfolgenden Kondensator 3, damit ein ausreichend guter Wärmeübergang stattfinden kann.

Nach Abschluss der Kondensation bewirkt die Temperaturdifferenz $\Delta T_{cond}$ eine leichte Unterkühlung des Arbeitsfluids, bis es den Betriebspunkt 104 erreicht.

Würde man die Verbräuche der elektrischen Energieverbraucher mit Ausnahme der Wellenleistung des Kompressors ignorieren, ergäbe sich die thermodynamische Leistungszahl aus dem Quotienten der Differenzen der Enthalpien in den Betriebspunkten 103 und 104 zu 103 und 102 und es würde die Gleichung gelten:

$$CoP = (h_3 - h_4) / (h_3 - h_2)$$

mit den spezifischen Enthalpien $h_2$ im Betriebspunkt 102, $h_3$ im Betriebspunkt 103 und $h_4$ im Betriebspunkt 104. Hierbei ist angenommen, dass im elektronischen Expansionsventil 4 eine isenthalpe Entspannung erfolgt und die Enthalpien in den Betriebspunkten 101 und 104 daher identisch sind.

Man erkennt hieran, dass das thermodynamische Optimum umso besser erreicht werden kann, wenn die beiden Temperaturdifferenzen $\Delta T_{evap}$ und $\Delta T_{cond}$ jeweils minimal werden, der Zielwert Null jedoch zu unendlich langsamen Wärmeübergängen oder übermäßig großen Wärmetauscherflächen führen müsste. Praktisch muss diese Optimierung aber auch ohne exzessiven Mehrverbrauch durch sonstige elektrische Energieverbraucher, wie beispielsweise Lüfter und Umwälzpumpen erreicht werden, wenn die reale Leistungszahl, die technisch erreichbar ist, optimal werden soll, ohne dass dies zu erhöhten Kosten führt.

Nach Erreichen des Betriebspunktes 104 wird das leicht unterkühlte, flüssige Arbeitsfluid im elektronisch geregelten Expansionsventil 4 zum Ausgangs-Betriebspunkt 101 hin entspannt, wobei ein großer Teil des flüssigen Arbeitsfluids praktisch spontan dampfförmig wird. Dieser Flashvorgang führt zu einer starken Abkühlung und ist schwer zu regeln, da der physikalische Flash-Verdampfungsprozess als solcher prinzipiell chaotisch abläuft. Außerdem kann der Massenstrom durch dieses elektronische geregelte Expansionsventil 4 praktisch kaum gemessen werden, bekannte Messgeräte müssten im Bereich der unterkühlten Flüssigkeit kurz vor dem elektronisch geregelten Expansionsventil 4 angeordnet werden, sie benötigen viel Bauraum und sind sehr teuer. Im Falle von Messblenden, Vortex-Durchflussmessern oder Coriolis-Messgeräten wären in unmittelbarer Nähe zur einsetzenden Flashverdampfung wegen der systembedingten lokalen Flüssigkeitsbeschleunigungen und damit verbundenen Druckschwankungen auch erhebliche Messfehler zu erwarten, und zwar umso mehr, je näher man dem Optimum einer möglichst geringen Unterkühlung käme.

Auf diese Messgeräte soll daher verzichtet werden. In den beiden folgenden Regelkaskaden wird anhand eines Beispiels gezeigt, wie der Fachmann dies durchführen kann, wobei sich die Erfindung aber nicht auf dieses Beispiel beschränkt.

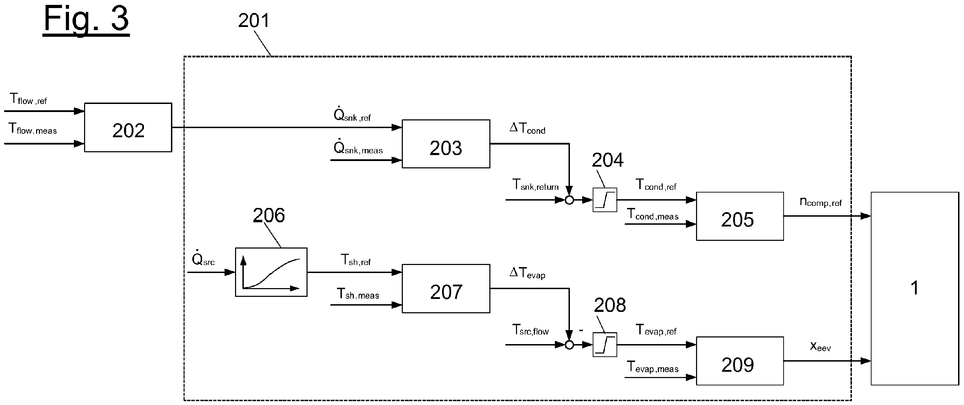

Fig. 3 zeigt eine Regelungskaskade in einem Leistungsregler 201, die beim Anfahrvorgang bis zum Erreichen eines stabilen, stationären Betriebs angewendet wird. Die Eingangsgröße ist ein Signal, welches der PID-Regler 202 aus der Solltemperatur $T_{flow,ref}$ und der gemessenen Vorlauftemperatur $T_{flow,meas}$ des Heizkreises bildet. Aus dem Sollwert der Wärmesenke $\dot{Q}_{snk,ref}$ und dem gemessenen Wert dieses Wärmestroms $\dot{Q}_{snk,meas}$ bildet der PID-Regler 203 den Wert für die Temperaturdifferenz $\Delta T_{cond}$ im Kondensator. In Verbindung mit der Temperatur der Wärmesenke, hier also dem Heizkreislauf im Kondensator, ergibt sich der Sollwert für die Kondensatortemperatur additiv zu $T_{cond,ref}$, der jedoch vom Begrenzer 204, dem Kompressor-Envelope entsprechend, begrenzt wird. Zusammen mit dem gemessenen Wert der Kondensationstemperatur $T_{cond,meas}$ bildet der PID-Regler 205 daraus das Steuersignal für die Drehzahl des Kompressors $n_{comp,ref}$, welches dem Kältekreis zur Verfügung gestellt wird. Auf diese Weise wird der vom Kältekreis an den Heizkreislauf abgegebene Wärmestrom zur Führungsgröße für die Fördermenge des Kompressors.

Der Leistungsregler 201 übernimmt den Wärmestrom $\dot{Q}_{src}$ aus einer Datentabelle oder einer Rechenvorschrift 206, die den von der Wärmequelle aufzunehmenden Wärmestrom $\dot{Q}_{src}$, sowie Stoffdaten und Zustandsgrößen wie Druck und Temperaturen miteinander in Verbindung bringt, woraus die erforderliche Soll-Überhitzungstemperatur $T_{sh,ref}$ für den Verdampferausgang als Führungsgröße gebildet wird. Im Überhitzungsregler 207 wird dieser mit der aktuell gemessenen Überhitzung $T_{sh,meas}$ verglichen und der Wert für die Temperaturdifferenz $\Delta T_{evap}$ im Verdampfer wird gebildet. In Verbindung mit der Temperatur der Wärmequelle ergibt sich der Sollwert für die Verdampfertemperatur $T_{evap,ref}$ durch Subtraktion, der jedoch vom Begrenzer 208, dem Kompressor-Envelope entsprechend, begrenzt wird. Zusammen mit dem gemessenen Wert der Verdampfungstemperatur $T_{evap,meas}$ bildet der PID-Regler 209 daraus das Steuersignal für die Öffnung des elektronischen Expansionsventils $x_{eev}$, welches dem Kältekreis zur Verfügung gestellt wird. Auf diese Weise wird der vom Kältekreis aus der Wärmequelle aufgenommene Wärmestrom zur Führungsgröße des elektronischen Expansionsventils, ohne dass man jedoch weiß, welche Mengen an Arbeitsmittel tatsächlich durch dieses elektronisch geregelte Expansionsventil 4 fließen.

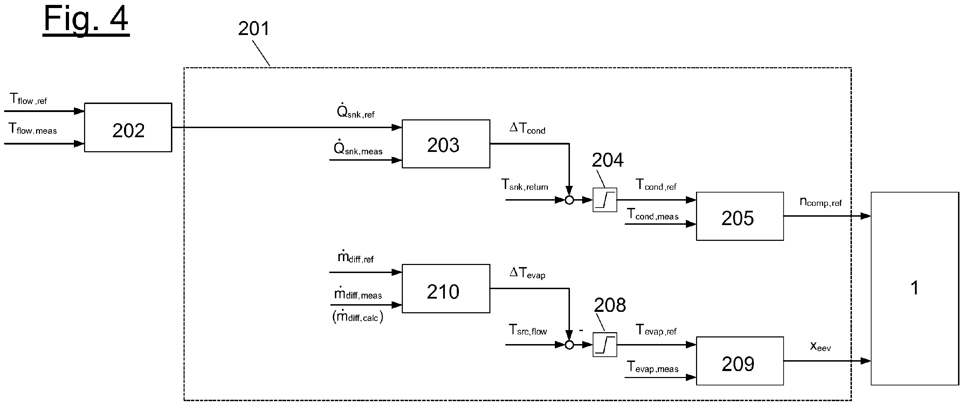

Fig. 4 zeigt eine Regelungskaskade in einem Leistungsregler 201, die nach Erreichen eines stabilen, stationären Betriebs angewendet wird. Hierbei ist der Teil, der die Kompressorleistung aus der abgegebenen Wärmemenge in den Heizkreislauf regelt, im wesentlichen mit dem in Fig. 3 dargestellten Regelverfahren identisch.

Im Unterschied dazu wird die Regelung des elektronischen Expansionsventils 4 mittels einer Massenstromdifferenzermittlung des Arbeitsfluids vorgenommen. Hierzu wird der Massenstrom-Sollwert $\dot{m}_{diff,ref}$ mit dem gemessenen Differenzmassenstrom $\dot{m}_{diff,meas}$ verglichen und daraus im PID-Regler 210 der Wert für

die Temperaturdifferenz $\Delta T_{evap}$ im Verdampfer durch Subtraktion gebildet. Der weitere Regelungsverlauf ist mit dem in Figur 3 identisch.

Die Messung des Differenzmassenstroms $\dot{m}_{diff,meas}$ kann jedoch nicht direkt erfolgen, sondern muss durch eine Berechnung ersetzt werden, die einerseits den Massenstrom durch den Kompressor aus den Leistungsdaten und dem Kennfeld errechnet und andererseits den Massenstrom durch das elektronisch geregelte Expansionsventil aus den Gleichungen des physikalischen Modells ermittelt. Eine solche Ermittlung kann durch einen Massenstromschätzer oder anderweitig erfolgen. Die Differenz dieser beiden Massenströme durch den Kompressor und das elektronische Expansionsventil ergibt den Differenzmassenstroms $\dot{m}_{diff,meas}$.

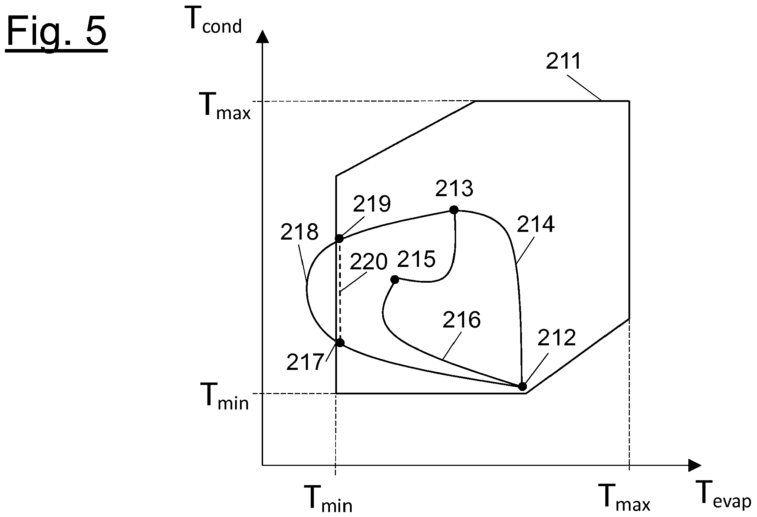

In den beiden Regelkonzepten, die in Fig. 3 und Fig. 4 dargestellt sind, werden die Begrenzer 204 und 208 für Temperaturen benötigt. Diese Begrenzungen folgen aus den Limitationen des Kompressors, wie es in Fig. 5 schematisch dargestellt ist. Hierbei sind sowohl auf der Saugseite als auch auf der Druckseite jeweils Mindesttemperaturen und Höchsttemperaturen zu beachten, was durch ein Kennfeld, welches als Kompressor-Envelope 211 bezeichnet wird, dargestellt ist. Dieser Kompressor-Envelope 211 ist typabhängig.

Zu Beginn des Betriebs liegen die Betriebsbedingungen üblicherweise im Startpunkt 212, also bei Mindesttemperatur, bei der eine Kondensation bei kaltem Heizkreislauf durchführbar ist. Je nach Umweltbedingungen und Anwenderwünschen kann der hier dargestellte Endpunkt 213 auf verschiedenen Wegen erreicht werden. Dieser Endpunkt 213 darf nicht mit dem Begriff "stabiler Betrieb" verwechselt werden, der stabile Betrieb und damit die oben beschriebene Umschaltung der Regelung kann deutlich früher erreicht werden, je nachdem, wie langsam die Änderungen zwischen dem Startpunkt 212 und dem Endpunkt 213 durchgeführt werden.

Der Verlauf der Betriebszustände kann auf direktem Weg 214 erfolgen, oder über einen Haltepunkt 215, der auf einem alternativen Weg 216 erreicht wird und erst später zum Endpunkt 213 führt, oder er kann am Grenzpunkt 217 aus dem Kompressor-Envelope 211 herauslaufen, wenn er nicht limitiert wird. Diese Limitierungen werden von den Begrenzern 204 und 208 durchgeführt, welche das System davon abhalten, den verbotenen Verlauf 218 zu durchfahren, und die stattdessen das System auf den Grenzpfad 220 zum Betriebspunkt 219 zwingen, von dem aus der Endpunkt 213 schließlich erreicht wird.

Während der Leistungsregler 201 im Startfall nur durch die Begrenzer 204 und 208 sicher davon abgehalten werden kann, die Betriebsgrenzen des Kompressors zu überschreiten, ist es im stabilen Fall nach dem Umschalten auf Differenzmassenstromregelung möglich, diesen Fall zu umfahren, so dass die Begrenzer lediglich in besonderen Ausnahmefällen eingreifen müssen. Der tatsächliche Regelungsbereich wird dadurch deutlich vergrößert, was ein Vorteil der Erfindung ist. Außerdem sinkt die Temperaturspreizung zwischen Kondensator und Verdampfer, weil die erforderlichen Temperaturdifferenzen minimiert werden. Dies führt auch dazu, dass die Mindest- und Maximaltemperaturen im Kompressor-Envelope später, wenn überhaupt, erreicht werden und das verbessert den Wirkungsgrad sowohl, was den thermodynamischen CoP, als auch die praktisch wichtige Leistungszahl betrifft.

Bezugszeichenliste

| | |
|---|---|
| 1 | Arbeitsfluidumlauf |
| 2 | Kompressor bzw. Kältekompressor |
| 3 | Kondensator |
| 4 | Elektronisch geregeltes Expansionsventil |
| 5 | Verdampfer |
| 6 | verdichtetes Arbeitsfluid |
| 7 | Wärmeträgerstrom |
| 8 | Umwälzpumpe |
| 9 | Wärmestrom |
| 10 | kondensiertes Arbeitsfluid |
| 11 | Kältestrom |
| 12 | Umgebungsluft |
| 13 | Lüfter |
| 14 | erwärmtes Arbeitsfluid |
| 15 | Sammelbehälter |
| 16 | Temperaturmessstelle |
| 17 | Temperaturmessstelle |
| 18 | Druckmessstelle |
| 19 | Messdaten |
| 20 | Druckmessstelle |
| 21 | Temperaturmessstelle |
| 22 | Massenstromschätzer |
| 23 | Regelkreis für Entspannungs-Regelventil |
| 24 | Temperaturmessstelle |
| 25 | Druckmessstelle |
| 26 | Temperaturmessstelle |
| 27 | Druckmessstelle |
| 101 | Betriebspunkt |
| 102 | Betriebspunkt |
| 103 | Betriebspunkt |
| 104 | Betriebspunkt |
| 201 | Leistungsregler |
| 202 | PID-Regler |
| 203 | PID-Regler |
| 204 | Begrenzer |
| 205 | PID-Regler |
| 206 | Rechenvorschrift |
| 207 | Überhitzungsregler |
| 208 | Begrenzer |
| 209 | PID-Regler |
| 210 | PID-Regler |
| 211 | Kompressor-Envelope |
| 212 | Startpunkt |
| 213 | Endpunkt |
| 214 | direkter Weg |

215    Haltepunkt
216    alternativer Weg
217    Grenzpunkt
218    verbotener Verlauf
219    Betriebspunkt
220    Grenzpfad

**Patentansprüche**

1. Verfahren zur Regelung einer Wärmepumpe, in der ein linksdrehender thermodynamischer Clausius-Rankine-Kreisprozess betrieben und in welchem ein Arbeitsfluid in einem geschlossenen, hermetisch dichten Arbeitsfluidumlauf (1) geführt wird, wobei die Wärmepumpe jeweils mindestens einen Kompressor (2), mindestens ein elektronisch geregeltes Expansionsventil (4), mindestens einen Kondensator (3) und mindestens einen Verdampfer (5) aufweist, wobei Nutzwärme an einen Heizkreislauf abgegeben wird,
   **dadurch gekennzeichnet, dass**

   - ein SISO-Control-Regelungsverfahren für die Regelung jedes Kompressors (2) zum Einsatz kommt,
   - die Führungsgröße für die Kompressorregelung der Wärmestrom ist, der vom Arbeitsfluid im zugeordneten Kondensator (3) durch die Wärmetauscherwand auf das Heizkreiswasser (7, 9) übertragen wird,
   - die Regelung jedes elektronisch geregelten Expansionsventils (4) durch eine umschaltbare Kaskadenregelung (201) erfolgt,
   - wobei die erste der Kaskadenregelungen (201) als Führungsgröße den Temperaturwert (26) der Überhitzung im zugeordneten Verdampfer (5) nutzt,
   - und wobei die zweite der Kaskadenregelungen (201) als Führungsgröße die Arbeitsfluid-Massenstromdifferenz (210) zwischen Kompressor (2) und elektronisch geregeltem Expansionsventil (4) nutzt,
   - und von der ersten auf die zweite der Kaskadenregelungen (201) umgeschaltet wird, sobald sich während der Regelung der ersten Kaskadenregelung (201) ein stationärer Zustand eingestellt hat.

2. Verfahren nach Anspruch 1, **dadurch gekennzeichnet, dass** ein Zustandsbeobachter (22) den Massenstrom durch jeden Kompressor (2) und den Massenstrom (10, 11) durch jedes elektronisch geregelte Expansionsventil (4) ermittelt.

3. Verfahren nach einem der Ansprüche 1 oder 2, **dadurch gekennzeichnet, dass** jeder Verdampfer (5) von einem Lüfter (13) angeströmt wird und der elektrische Energiebedarf erfasst wird.

4. Verfahren nach einem der Ansprüche 1 bis 3, **dadurch gekennzeichnet, dass** die Leistungszahl in der zweiten der Kaskadenreglungen (201) bei der Ermittlung der Arbeitsfluid-Massenstromdifferenz ermittelt wird und mit jedem elektronisch geregelten Expansionsventil (4) in einem MIMO-Regelungsverfahren geregelt und dabei die Leistungszahl optimiert wird.

5. Verfahren nach einem der Ansprüche 1 bis 4, **dadurch gekennzeichnet, dass** die Leistungszahl in der zweiten der Kaskadenreglungen (201) bei der Ermittlung der Arbeitsfluid-Massenstromdifferenz ermittelt wird und die Lüfterdrehzahl zusammen mit jedem elektronisch geregeltem Expansionsventil (4) in einem MIMO-Regelungsverfahren gleichzeitig geregelt werden und dabei die Leistungszahl optimiert wird.

6. Verfahren nach einem der Ansprüche 1 bis 5, **dadurch gekennzeichnet, dass** die Leistungsregelung der Kompressoren (2) aus den Wärmeströmen der jeweils zugeordneten Wärmesenke abgeleitet wird, wobei je aus einer Sollwärmeleistung und einer gemessenen Wärmeleistung in einem ersten Regler zunächst eine Temperaturdifferenz für den zugeordneten Kondensator (3) ermittelt wird, diese zur Vorlauftemperatur der jeweiligen Wärmesenke addiert und daraus je eine Solltemperatur für den zugeordneten Kondensator gebildet wird, diese Solltemperatur mit der gemessenen Kondensatortemperatur verglichen wird und daraus mit einem zweiten Regler je eine Solldrehzahl für den Kompressorantrieb gebildet wird.

7. Verfahren nach einem der Ansprüche 1 bis 6, **dadurch gekennzeichnet, dass** die Regler für jeden Kompressorantrieb und für jedes elektronische Expansionsventil (4) alle so gestaltet sind, dass sie die Temperaturdifferenzen des jeweils nachfolgenden Wärmetauschers minimieren.

# Fig. 1

Fig. 2

Fig. 3

EP 3 640 565 A1

## Fig. 4

EP 3 640 565 A1

# Fig. 5

Europäisches Patentamt

European Patent Office

Office européen des brevets

# EUROPÄISCHER RECHERCHENBERICHT

**Nummer der Anmeldung**

EP 19 20 1606

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2008/302118 A1 (CHEN YU [US] ET AL) 11. Dezember 2008 (2008-12-11) | 1 | INV. F25B29/00 F25B49/02 F25B41/06 |
| A | * Absätze [0015], [0016], [0018], [0019]; Abbildung 1 * | 2-7 | |
| Y | EP 1 775 533 A2 (STIEBEL ELTRON GMBH & CO KG [DE]) 18. April 2007 (2007-04-18) | 1 | |
| A | * Absätze [0009], [0010], [0016] - [0019], [0033], [0035], [0053], [0055]; Abbildungen 1, 2 * | 2-7 | |
| A,D | JAIN N ET AL: "Comparison of SISO and MIMO control techniques for a diagonally dominant vapor compression system", AMERICAN CONTROL CONFERENCE, 2009. ACC '09, IEEE, PISCATAWAY, NJ, USA, 10. Juni 2009 (2009-06-10), Seiten 1580-1585, XP031486707, ISBN: 978-1-4244-4523-3 * Seite 2 - Seite 4 * | 1-7 | |
| A | WO 2005/016672 A1 (BEHR GMBH & CO KG [DE]; KIRSCHNER VOLKER [DE]; LIERMANN ANDREAS [DE]) 24. Februar 2005 (2005-02-24) * Seite 2 - Seite 3; Abbildung 1 * | 1-7 | RECHERCHIERTE SACHGEBIETE (IPC)<br>F25B |

Der vorliegende Recherchenbericht wurde für alle Patentansprüche erstellt

| Recherchenort | Abschlußdatum der Recherche | Prüfer |
|---|---|---|
| München | 12. November 2019 | Amous, Moez |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 20 1606

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-11-2019

| Im Recherchenbericht angeführtes Patentdokument | Datum der Veröffentlichung | Mitglied(er) der Patentfamilie | Datum der Veröffentlichung |
|---|---|---|---|
| US 2008302118 A1 | 11-12-2008 | CA 2616286 A1<br>EP 1938021 A1<br>US 2008302118 A1<br>WO 2007027173 A1 | 08-03-2007<br>02-07-2008<br>11-12-2008<br>08-03-2007 |
| EP 1775533 A2 | 18-04-2007 | KEINE | |
| WO 2005016672 A1 | 24-02-2005 | DE 10337136 A1<br>EP 1656269 A1<br>JP 2007501737 A<br>US 2006278385 A1<br>WO 2005016672 A1 | 24-03-2005<br>17-05-2006<br>01-02-2007<br>14-12-2006<br>24-02-2005 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• WO 2014191237 A1

**In der Beschreibung aufgeführte Nicht-Patentliteratur**

• **NEERA JAIN ; ANDREW G ALLEYNE.** Comparison of SISO and MIMO Control Techniques for a Diagonally Dominant Vapor Compression System. *2009 American Control Conference Hyatt Regency Riverfront,* 10. Juni 2009, 1580-1585